# EUROPEAN PATENT SPECIFICATION

(11) **EP 1 616 083 B1**
(45) Date of publication and mention of the grant of the patent: **26.09.2012**
(21) Application number: 04728502.8
(22) Date of filing: 21.04.2004
(51) Int. Cl.: F01N 1/24, F01N 3/24, B01D 53/94, B01D 39/20, B01J 35/04, B01J 35/10, F01N 3/022, F01N 3/28

(54) **MUFFLER AND CATALYTIC CONVERTER DEVICES**
SCHALLDÄMPFER- UND KATALYSATORVORRICHTUNGEN
SILENCIEUX ET CONVERTISSEUR CATALYTIQUE

(30) Priority: 24.04.2003 CN 03114334; 30.04.2003 CN 03114399; 26.12.2003 CN 200320125349
(43) Date of publication of application: 18.01.2006
(73) Proprietor: Byd Company Limited, Shenzhen, Guangdong 518119 (CN)
(72) Inventor: LI, Chunbo Dormitory mail-stop, Shenzhen, Guangdong 518119 (CN); CHENG, Hongwei Dormitory mail-stop, Shenzhen, Guangdong 518119 (CN); WANG, Chuanfu Dormitory mail-stop, Shenzhen, Guangdong 518119 (CN); DONG, Junqing Dormitory mail-stop, Shenzhen, Guangdong 518119 (CN)
(74) Representative: Böck, Bernhard
(86) International application number: PCT/CN2004/000380
(87) International publication number: WO 2004/094793

(56) References cited:
- EP-A- 0 603 392
- EP-A- 0 957 241
- EP-A- 1 065 352
- EP-A1- 0 630 676
- CN-A- 1 403 692
- CN-U- 2 093 242
- CN-Y- 2 246 714
- DE-A1- 3 922 910
- DE-A1- 19 750 980
- US-A- 5 937 641
- US-A- 6 040 266

## Description

This invention relates to muffler catalytic converter devices for the exhaust system of an engine. More particularly, it relates to the use of porous metal as the sound absorption material and the substrate for the catalyst for muffler catalytic converter devices for the exhaust system of engines.

The removal of environmental contaminants from an engine's exhaust and the muffling of engine noise are all integral functions of the exhaust system of an engine. At present, for machines operated by engines such as automobiles, two separate devices perform these functions. The muffler is used to reduce engine noise while the catalytic converter is used to purify the exhaust by the removal of environmentally harmful contaminants. Having two separate devices to perform these two functions not only causes a decrease in engine efficiency, it also increases the cost of production of the exhaust system by the increase in the cost of the production and installation of the two devices.

Catalytic converters often use ceramic and metal as the substrate for the catalyst. Honeycombed ceramic substrates have many disadvantages when compared with metal substrates. They generally operate at lower temperatures since ceramic softens at about 1400°C. Their walls are thicker. They preheat slower and the exhaust pressure in systems with these catalytic converters is higher. For these reasons, many countries are conducting research on the use of metal substrates. The wall of a metal substrate is only a quarter as thick as that of the ceramic substrate. As a result, exhaust pressure is lowered and the substrate for the catalyst can be made smaller. Metal substrates can be heated efficiently since they have a small capacity and can be electrically preheated. Moreover, metal substrates can adapt well to temperature changes.

Existing metal substrates of automobile exhaust catalytic converter mainly use combinations of various structures of corrugated metal. Their resistance to heat and mechanical impact are low. At high temperatures, their anti-oxidation ability is insufficient, thereby affecting life of the devices. In addition, the specific surface area of these corrugated metal substrate are limited and their capacity for the catalyst to be adsorbed is inadequate, limiting the efficiency of these devices.

At present, automobile exhaust muffler system customarily use reactive type mufflers because these systems are constructed of metal with simple structures that are durable and can withstand high temperature, corrosion, and impact from the flow of exhaust. However, the spectrum of sound absorption for the reactive type muffler is narrow with sound absorption better at low frequencies and worse at high frequencies. In order to compensate for the weakness in high frequency sound absorption, multi-stage combinations structures such as, multi-stage mufflers or dissipative and reactive combination mufflers are often used to achieve better results. These devices are complex and increase the cost for the production of mufflers.

Alumina felt and asbestos felt are commonly used materials for sound absorption. They can resist high temperature and corrosion and can be firmly secured to a surface protecting structure. However, they are not durable as their ability to resist impact, humidity, and dust is low. Their sound absorption capability is also insufficient. Therefore, at present, they are not widely used in the automobile industry.

Due to the limitations of the prior art, it is therefore desirable to have novel devices that would have better sound absorption as well as good exhaust purification, is simple to make and easy to fabricate, and is durable by being resistant to high temperature, corrosion, and impact from the flow of the exhaust.

An object of this invention is to provide a muffler and catalytic converter device as defined in claim 1 that is effective in sound absorption over a wide spectrum of frequencies and efficient in the removal of environmental contaminants from the exhaust.

Yet still another object of this invention is to provide a muffler, a catalytic converter, or a muffler and catalytic converter as defined in claim 1 having properties including simplicity in construction, easy and cheap to fabricate, durable and having a long useable lifespan resulting from its resistance to high temperature, corrosion, and impact from the flow of exhaust.

The present invention relates to the use of baffles of porous metal with large specific surface area as the sound absorption material and as the substrate for the catalyst in the catalytic converter. The large specific surface area of the porous metal enables effective sound absorption and provides a large area for the catalyst to be adsorbed resulting in efficient exhaust purification. By using the same type of material for the sound absorption and exhaust purification, it is possible not only to construct separate muffler and catalytic converter devices but also to combine these two devices into one.

The advantages of the devices of this invention are that they are effective in sound absorption over a wide spectrum of frequencies, efficient in the removal of environmental contaminants from the exhaust, simple to construct and fabricate for industrial production, durable, and has a long useable life as they are resistant to high temperature, corrosion, and impact from the flow of the exhaust.

The foregoing and other objects, aspects and advantages of the invention will be better understood from the following detailed description of preferred embodiments of this invention when taken in conjunction with the accompanying drawings in which:
Figure 1 is a diagram of a cross section of an embodiment of the muffler and catalytic converter device which is not according to this invention.
Figure 2 is a structural diagram of an embodiment of this invention that uses porous metal as the sound absorption material and as the substrate for the catalyst coating.
Figure 3 a structural diagram an embodiment of the muffler and catalytic converter device of this invention.
Figure 4 is another structural diagram an embodiment of the muffler and catalytic converter device of this invention.

This invention as defined in the appended claims provides in several embodiments a muffler and catalytic converter device, a muffler, and a catalytic converter to absorb, muffle or reduce noise and to purify the exhaust by the removal of environmental contaminants from the exhaust of an engine. Baffles of sound absorption material, which can also act as the substrate for the catalyst coating, are used. These baffles can be made from porous metal with predetermined pore diameter and pore density to achieve desired results for the conversion of exhaust contaminants and for sound absorption.

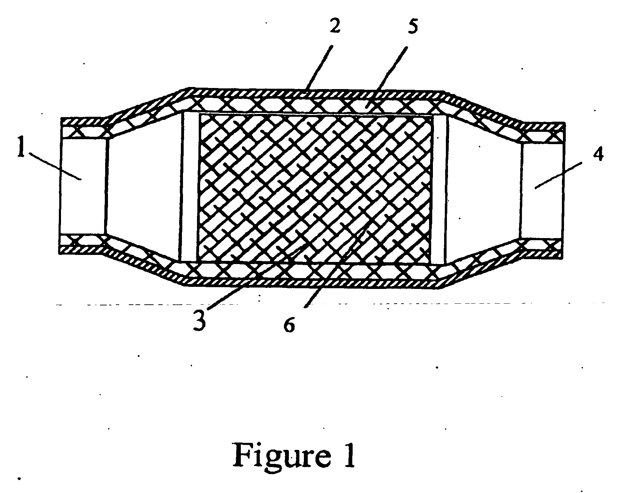

As shown in Figure 1, an embodiment which is not according to this invention, comprises of a metal outer shell (2), with its two openings at the ends, the intake opening and the outtake opening, respectively connected with the intake pipe (1) and the outtake pipe (4). Baffles, i.e., sections of material(s), are placed inside the outer shell. These baffles have one or two functions. They can act as the sound absorption medium and they can also be the substrate for the deposition of a catalyst coating for purifying exhaust. Baffles can be made from porous metal have multiple pores having a predetermined pore density and pore diameter. (The pore density in one calculation method is the ratio of the volume of the pores with the volume of the total material * 100.) The baffles can be made from different materials to achieve the best results for sound absorption and exhaust purification. At least a part of a baffle is made from porous metal with pore diameters between 50µm and 1200µm and pore density between 80% and 98%. The preferred pore density is between 95% and 98% and the preferred pore diameter is between 400µm and 800µm. A coating of catalyst (6) can be attached to the surface of the porous metal material (3). A cushioning layer (5) can also be inserted between the porous metal (3) and the body of the outer shell (2). For better performance of the muffler catalytic converter device, it is preferable that the volume of the device, i.e., the volume of the outer shell containing the baffles, is 0.3 to 7 times the volume of the displacement of the engine.

Electroplating is used to fabricate the porous metal with pores diameters between 50 to 1200 micrometers and pore density between 80% and 98%. High temperature oxidation, electrochemical anodic oxidation, etching with heated organic acid, or other methods are used to form a thin dense oxide layer on the surface of the substrate. This not only increases the adhesion between the substrate and the catalyst coating including the oxide layer such as aluminum oxide, zirconium oxide and cerium oxide, but also increases the substrate's ability to resist high temperature oxidation and increases the catalyst's purification efficiency and lifespan.

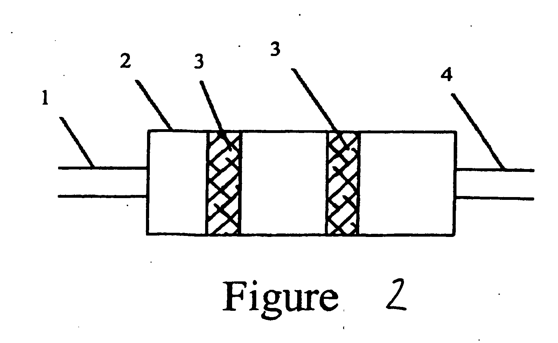

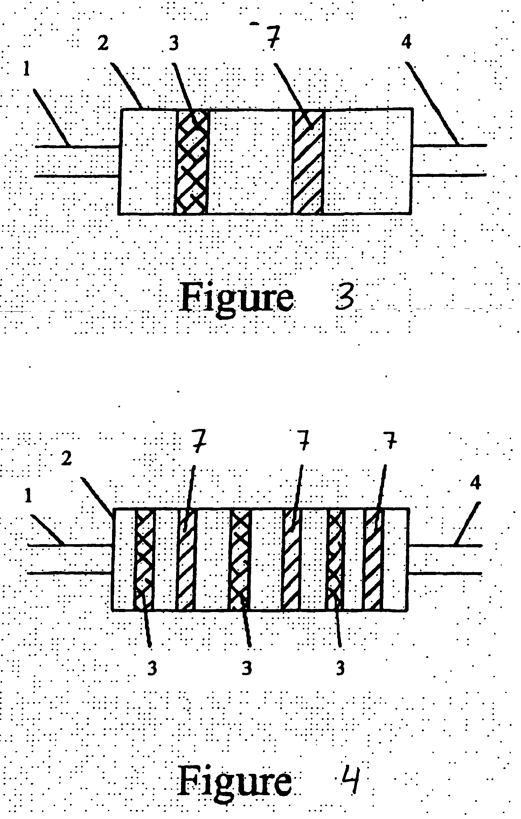

In embodiments of this invention, baffles of porous metal can be placed in sections across the direction of the exhaust flow, i.e., the flow from the intake opening to the outtake opening, with gaps between the baffles. A baffle can be typically placed across the direction of exhaust flow when the planes tangential to its surfaces (that are not touching the inside surfaces of the outer shell) forms an angle of π/2 radians with the direction of exhaust flow. Figure 2 shows disc shaped baffles inside a cylindrical outer shell. In practice, the shape of the outer shell, as well as the shape of the baffles can vary. Also, multiple baffles can be placed inside the outer shell with gaps between the neighboring baffles and between the baffle and the inner surfaces of the shell. For example, an embodiment can be constructed where there are between three to six baffles forming four to seven gaps. Figure 4 shows an embodiment with six baffles and seven gaps.

The thickness of a baffle can be measured as the average distance between the planes tangential to the surfaces of the baffles that are not touching the surface of the outer shell. The thickness of a gap between two neighboring baffles can be measured as the average distance between neighboring planes tangential to the surfaces of the neighboring baffles that are not touching the surface of the gaps. The thickness of a gap between an inner surface of the outer shell and its neighboring baffle can be the average distance between the plane tangential to the surface of the baffle not touching the outer shell and the outer shell. For baffles of variable shapes, it is understood that the thickness of the baffles and the thickness of the gaps can vary but that they all fall within a pre-determined thickness. For the disc shaped baffles in Figure 2 that is inside a cylindrical shell, the thickness of the disc is the thickness of the baffle while the thickness of the gap between two baffles that are similarly placed would be the distance between the two neighboring disc surfaces of the baffles. The thickness of the gap between a baffle and the outer surface would be the distance between the inner flat surface of the outer shell and the neighboring flat surface of the disc. For embodiments where baffles are placed across the direction of exhaust flow, the preferred thickness of the baffles of porous metal is between 10mm and 100mm and the preferred thickness of the gaps is between 10mm and 150mm. Since embodiments of this invention use a porous metal with a high pore density (between 80% to 98%), a large pore diameter (between 50µm and 1200µm), and a high mechanical strength, exhaust can flow smoothly through this device without adding any additional air channels. This allows the porous metal to achieve the desired results with the embodiments described above.

In embodiments where two baffles are placed perpendicular to the flow of exhaust, a preferred ratio of the three gaps are: 1: between 1 and 10: between 1 and 2.

In some embodiments of this inventions that are mufflers, catalytic converters, or muffler and catalytic converter devices, said porous metal, a metal or an alloy, is one or more metals selected from the following group: nickel, iron, or titanium.

In other embodiments of this invention that are mufflers, catalytic converters, or muffler and catalytic converter devices, said porous metal is an alloy with two components, A and B, where component A is between 55 wt% and 95% wt.% of the porous metal and is one or more of the following: nickel, iron, or titanium. The B component is between 5wt.% and 45 wt.% of the porous metal and is one or more of the following: chromium, Cr, aluminum, Al, cobalt, Co, molybdenum, Mo, and zinc, Zn.

For embodiments that are catalytic converters or muffler and catalytic converter devices, the composition of the catalyst coating includes an active ingredient, an assisting ingredient, and a stabilizer. The active ingredient is one ore more rare earth metals from the following: cerium, Ce, lanthanum, La, praseodymium, Pr, and neodymium, Nd and small quantities of one or more precious metals from the following: palladium, Pd , platinum, Pt, rhodium, Rh, and ruthenium, Ru. The assisting ingredient is one or more of the following: manganese, Mn, calcium, Ca, barium, Ba, magnesium, Mg, zinc, Zn, and aluminum, Al. The stabilizer is one or more of the following: zirconium, Zr, potassium, K, sodium, Na, and lithium, Li.

The effectiveness of the sound absorption and exhaust purification of the embodiments is highly dependent on the properties of the porous metal, namely, the pore diameter and the pore density. Examination of the sound absorption and exhaust purification results of different embodiments leads to the following conclusions.

The effectiveness of the exhaust purification is highly dependent on the size of the pore diameter of the porous metal. When the pore diameter is between 50µm and 1200µm, the purification results are good. The purification results are the best when the pore diameter is between 400µm and 800µm.

The sound absorption ability is also highly dependent on the size of the pore diameter. Seven groups of experiments were conducted in order to determine the preferred parameters for the pore diameter. The results are shown in Table 1.

**Table 1**

| Group | Pore Diamter (µm) | coefficient of sound absorption for different frequencies | | | | |
|---|---|---|---|---|---|---|
| | | 100 Hz | 500 Hz | 1500 Hz | 2500 Hz | 4000 Hz |
| 1 | 50 | 0.14 | 0.24 | 0.32 | 0.28 | 0.26 |
| 2 | 100 | 0.22 | 0.37 | 0.45 | 0.42 | 0.36 |
| 3 | 200 | 0.28 | 0.54 | 0.68 | 0.72 | 0.73 |
| 4 | 400 | 0.35 | 0.62 | 0.75 | 0.72 | 0.74 |
| 5 | 800 | 0.35 | 0.68 | 0.71 | 0.72 | 0.75 |
| 6 | 1200 | 0.32 | 0.61 | 0.72 | 0.72 | 0.65 |
| 7 | 1600 | 0.26 | 0.41 | 0.52 | 0.62 | 0.55 |

Table 1 shows that the sound absorption coefficient of the device increases as the pore diameter increases exhibiting a trend to first increase from low to high and then decrease from high to low. The best results for sound absorption are obtained between 200µm to 1200µm. At the same time, the sound absorption results are better at high frequencies than low frequencies.

To achieve better sound absorption characteristics, especially at lower frequencies, methods such as leaving gaps between baffles of the sound absorption material and reasonably increasing the thickness of the material are used. Theoretically, gaps can also have the effect of increasing the material's thickness. This is equivalent to increasing the effective length of the capillaries. This method will decrease the use of materials, lower cost, and improve the material's sound absorption properties, especially at the lower frequencies. To improve the sound absorption, gaps are also left between the sound absorption material (3) and the outer shell of the device (2) with a predetermined ratio between the gaps. Research shows that, especially at lower frequencies, sound absorption increases when the thickness of the porous material is between 10mm and 100 mm, and the size of the gap is between 10 mm and 150 mm. Therefore, embodiments of this invention have good sound absorption in a wide spectrum of frequencies. In another embodiment of this invention, when the three air gaps between two adjacent baffles of porous metal are in the ratio of 1:1~10:1~2, the sound absorption effects are the best and the purification results are not affected.

The pore density of the porous metal material significantly determines the specific surface area of the substrate that the catalyst is attached to, the purification and sound absorption characteristics, and the air resistance. Generally speaking, large pore density has the advantage of decreasing air resistance and increasing the sound absorption. However, if the pore density of the material is increased to above 98%, the technology of fabricating the porous metal is more difficult and uneconomical. Too high a pore density would also affect the mechanical strength of the porous metal by lowering its ability to resist impact from the exhaust. Therefore, the preferred specification is to limit the pore density of the porous material to be between 80% and 90%.

The pore density of the different baffles of sound absorption material gap can vary. In addition, the size of the gap between the sections can vary. The sound absorption can be increased in a wider spectrum of frequencies by adjusting the pore density of the different sections and the thickness of the different gaps.

Embodiments 1 to 15 are concerned with materials, which can be used for fabricating a muffler and catalytic converter device according to the invention.

Embodiments 16 to 20 are muffler and catalytic converter devices according to the invention.

### Embodiment 1 (not according to the invention)

To fabricate the muffler and catalytic converter device of this embodiment, electroplating is used to first fabricate the baffles of porous nickel chromium alloy. Then the catalyst coating is fabricated on the porous metal alloy. The baffles of porous metal with catalyst coating are then inserted into a metal outer shell with a cushioning layer to form the final device.

### (1) Fabrication and pre-treatment of the porous nickel chromium metal alloy:

In this embodiment, electroplating is used to fabricate the porous nickel chromium alloy to a thickness of 1.5mm to 3.0 mm, a pore density of between 95% and 98%, and a pore diameter of 400 µm. This porous metal alloy has good mechanical strength and flexibility. There are no sealed pores and the pore diameter is distributed evenly. The specifications and the formula metal plating to fabricate the nickel chromium alloy are shown in Table 2.

**Table 2**

| Specifications | (g/L) |
|---|---|
| chromium chloride | 50 ~ 80 |
| nickel chloride | 20 ~ 75 |
| formic acid(mL/L) | 10 ~ 95 |
| boric acid | 20 ~ 50 |
| sodium citrate | 25 ~ 100 |
| ammonia chloride | 30 ~ 120 |
| sodium bromide | 40 ~ 90 |
| pH level | 1 ~ 4 |
| Temperature °C) | 20 ~ 60 |
| current density (A/dm2) | 2 ~ 10 |
| plating time (hour) | 1 ~ 6 |

The ingredients listed in Table 2 are stirred to completely dissolve in de-ionized water to form the electrolyte. The pH is then adjusted to approximately 3.5. To improve the quality of the plating layer, an additive such as sodium dedocyl sulphonate or coumarin is added.

An inert graphite is used for the positive electrode while the negative electrode is a commercially available porous sponge-like material coated with a conducting agent with predetermined pore diameter and pore density. The plated porous metal obtained with this process contains 60% to 90% nickel and 10-40% chromium.

After said porous nickel chromium alloy is fabricated as described above, it is pretreated by etching with heat in organic acid for 1 to 5 hours before it is ready to be used as a substrate for the catalyst in the muffler and catalytic converter device. The etching with heat in organic acid forms a thin, dense layer of oxidized material on the surface of the porous nickel chromium alloy. Other methods such as high temperature oxidation or electrochemical anodic oxidation can also be used to form this oxide layer.

### (2) Fabrication of the catalyst coating

The composition of the catalyst coating includes an active ingredient, an assisting ingredient, and a stabilizer. The active ingredient is at least one rare earth metals selected from the following group: cerium, Ce, lanthanum, La, praseodymium, Pr, and neodymium, Nd and small quantities of at least one precious metal selected from the following group: palladium, Pd , platinum, Pt, rhodium, Rh, and ruthenium, Ru. The assistant ingredient is at least one of the following: manganese, Mn, calcium, Ca, barium, Ba, magnesium, Mg, zinc, Zn, and aluminum, Al. The stabilizer is at least one of the following: zirconium, Zr, potassium, K, sodium, Na, and lithium, Li.

The catalyst coating of this embodiment contains a mixture of nanometer y alumina and nanometer zirconia in the ratio of between 0:3 and 3:0. To fabricate the catalyst coating, a pre-determined ratio of a slurry mixture of powdered oxides of aluminum and zirconium is immersed in a saturated solution of cerium salt at a temperature of 30°C to 80°C for about to 2 hours to 5 hours to form a slurry. At that temperature, the porous metal substrate that has been etched with heat in organic acid is immersed in said slurry for 2 hours to 4 hours. Then, pressurized air or centrifuge is used to remove excess slurry from the substrate. The porous metal substrate is heated at 400°C to 600°C for 1 to 8 hours and then cooled to room temperature.

After cooling, the porous metal alloy substrate that has been calcined is heat treated in organic acid, then immersed in a solution containing soluble cerium salt, rhodium salt and small amounts of manganese salt at a temperature of between 30°C and 80°C for 2 hours to 4 hours. The calcinations process described above is then repeated to obtain the catalyst coating on the substrate for the muffler and catalytic converter device.

As illustrated in Figure 1, the muffler catalytic converter device of this embodiment made by placing the baffles of porous metal alloy (3) with catalyst coating (6) inside a cylindrical shaped stainless steel outer shell (2), and a cushioning layer (5).

### Embodiment 2 (not according to the invention)

The fabrication of the porous nickel chromium metal alloy and the pretreatment of the porous metal alloy remains the same as Embodiment 1.

To fabricate the catalyst coating layer, the porous nickel chromium metal alloy substrate that has been pretreated in organic acid to form an oxide layer is immersed in a solution that include a pre-determined ratio of a mixture of soluble aluminum salt, zirconium salt, cerium salt, rhodium salt. After immersion, excess solution is removed and the substrate coated with said mixture is heat dried. The porous metal alloy with catalyst coating is heated at 400°C to 600°C for 2 hours to 6 hours and then cooled to room temperature. The above described processes, etching with organic acid, immersion, heat dry, and calcinations are repeated to form multi-layers of oxidized material on the surface of the substrate until the porous metal alloy with catalyst coating reaches the pre-determined technical specification.

As illustrated in Figure 1, the muffler catalytic converter device of this embodiment made by placing the porous metal alloy (3) with catalyst coating (6) inside a cylindrical shaped stainless steel outer shell (2), and a cushioning layer (5).

### Embodiment3 (not according to the invention)

Nickel chromium metal alloy with a thickness of 1.5mm to 3.0 mm, a pore density of 95% to 98%, and a pore diameter of 50 µm is used as the substrate for the catalyst coating in this embodiment. Other than this, the fabrication of the muffler and catalytic device remains the same as Embodiment 1.

### Embodiment 4 (not according to the invention)

Nickel chromium metal alloy with a thickness of 1.5mm to 3.0 mm, a pore density of 95% to 98%, and a pore diameter of 200µm is used as the substrate for the catalyst coating in this embodiment. Other than this, the fabrication of the muffler and catalytic device remains the same as Embodiment 1.

### Embodiment 5 (not according to the invention)

Nickel chromium metal alloy with a thickness of 1.5mm to 3.0 mm, a pore density of 95% to 98%, and a pore diameter of 600µm is used as the substrate for the catalyst coating in this embodiment. Other than this, the fabrication of the muffler and catalytic device remains the same as Embodiment 1.

### Embodiment 6 (not according to the invention)

Nickel chromium metal alloy with a thickness of 1.5mm to 3.0 mm, a pore density of 95% to 98%, and a pore diameter of 800µm is used as the substrate for the catalyst coating in this embodiment. Other than this, the fabrication of the muffler and catalytic device remains the same as Embodiment 1.

### Embodiment 7 (not according to the invention)

Nickel chromium metal alloy with a thickness of 1.5mm to 3.0 mm, a pore density of 95% to 98%, and a pore diameter of 1000µm is used as the substrate for the catalyst coating in this embodiment. Other than this, the fabrication of the muffler and catalytic device remains the same as Embodiment 1.

### Embodiment 8 (not according to the invention)

Nickel chromium metal alloy with a thickness of 1.5mm to 3.0 mm, a pore density of 95% to 98%, and a pore diameter of 1200µm is used as the substrate for the catalyst coating in this embodiment. Other than this, the fabrication of the muffler and catalytic device remains the same as Embodiment 1.

The above-described embodiments were placed in automobiles and their conversion rates of exhaust contaminants were measured. Their conversion rates for CO, HC, NOx after test driving for 30,000 km are listed in the Table 3.

**Table 3**

| Pore Diameters and Conversion Rates | | | | | | | | |
|---|---|---|---|---|---|---|---|---|
| | Embodiment 1 | Embodiment 2 | Embodiment 3 | Embodiment 4 | Embodiment 5 | Embodiment 6 | Embodiment 7 | Embodiment 8 |
| Pore diameter (µm) | 400 | 400 | 50 | 200 | 600 | 800 | 1000 | 1200 |
| CO Conversion Rate (%) | 91 | 94 | 80 | 83 | 95 | 93 | 87 | 75 |
| HC Conversion Rate(%) | 94 | 93 | 75 | 76 | 93 | 90 | 83 | 70 |
| NOx Conversion Rate(%) | 72 | 70 | 50 | 55 | 74 | 73 | 71 | 60 |

Table 3 shows that when porous nickel chromium is used for the substrate for the catalyst, the effectiveness of the catalytic converter part of this device is highly dependent on the pore diameter. The conversion rate of exhaust contaminants is good when the pore diameter is between 50µm and 1200 µm. The conversion rates are the best when pore diameter is between 400µm and 800µm with the CO and HC conversion rates above 90% and the NOx rates above 70%.

### Embodiment 9 (not according to the invention)

In this embodiment, there are two baffles of sound absorbing material made from porous nickel fabricated by electroplating that are secured in two sections to the inside of the outer metal shell and placed perpendicular to the direction of the exhaust flow. Gaps are left between the porous metal and the outer shell and between the different sections of the baffles of porous metal. The pore density is between 80% and 98%. Best sound absorption results are obtained when the pore density is between 95% and 98%. The pore diameter of the porous metal is 200µm. The thickness of the porous metal is between 10mm and 100mm and the thickness of the gaps is between 10mm and 150 mm. The porous nickel fabricated by electroplating has evenly spaced pores, with no sealed pores. Therefore, this material has high structural strength and pre-determined flexibility.

### Embodiment 10 (not according to the invention)

In this embodiment, the pore diameter of the porous nickel is 400µm. All other specifications are the same as Embodiment 9.

### Embodiment 11 (not according to the invention)

In this embodiment, the pore diameter of the porous nickel is 800µm. All other specifications are the same as Embodiment 9.

### Embodiment 12 (not according to the invention)

In this embodiment, the pore diameter of the porous nickel is 1200µm. All other specifications are the same as Embodiment 9.

### Embodiment 13 (not according to the invention)

In this embodiment, the porous nickel chromium alloy containing 55 wt% of nickel and 45 wt.% of chromium has a pore diameter of 200µm. All other specifications remain the same. This embodiment is more durable and has a longer useable life since the porous nickel chromium is strong with a high resistance to oxidation and heat corrosion.

### Embodiment 14 (not according to the invention)

In this embodiment, the porous nickel chromium alloy containing 75 wt.% of nickel and 25 wt.% of chromium has a pore diameter of 200µm. All other specifications remain the same.

### Embodiment 15 (not according to the invention)

In this embodiment, the porous nickel chromium alloy containing 95 wt.% of nickel and 5 wt.% of chromium has a pore diameter of 200µm. All other specifications remain the same.

Embodiments 9 through 15 were placed in automobiles and the their sound absorption properties were tested using the Automobile Standard Noise Measuring Method (GB/T 14365-93) and External Noise Limit and Testing Method for Automobile Acceleration (GB 1495-2002), the noise level were all lower than 76dB and 73dB, all lower than the national standards. In addition, the useable lives for embodiments of this invention using porous metal alloy are longer than those using a single metal element as the porous metal material.

### Embodiment 16

Figure 2 illustrates this embodiment that includes an outer metal shell (2). The two ends of the outer shell (2) are separately connected with the intake pipe (1) and the outtake pipe (4). The intake and outtake pipes can be secured with flanges. The outer shell (2) holds baffles of porous metal (3) with pore density between 80% and 98% and pore diameter between 50µm and 1200µm. A coating of catalyst is attached to the surface of the porous metal. The baffles of porous metal are also sound absorbing material (3) and are placed perpendicular to the direction of the exhaust flow inside outer shell (2). (Figure 2 shows two baffles. In practice, multiple baffles can be used.) Gaps are left between the baffles of sound absorption material. The thickness of the baffles is between 10mm and 100mm. The thickness of the gaps is between 10mm and 150mm. For embodiments having two baffles of porous material, the ratio of the thickness of the three gaps is 1:5:2.

Said porous metal material, a metal or an alloy, is at least one of the metals selected from the following group: nickel, iron, or titanium. In the alternative, the porous metal can also be composed on an alloy with two components, A and B, where the A component is 55 wt.% to 95% wt.% of the porous metal and is at least one of the following: nickel, iron, or titanium. The B component is 5wt.% to 45 wt.% of the porous metal and is at least one of the following: chromium, Cr, aluminum, Al, cobalt, Co, molybdenum, Mo, and zinc, Zn.

The composition of the catalyst coating includes an active ingredient, an assisting ingredient, and a stabilizer. The active ingredient is at least one rare earth metals selected from the following group: cerium, Ce, lanthanum, La, praseodymium, Pr, and neodymium, Nd and small quantities of at least one precious metal selected from the following group: palladium, Pd , platinum, Pt, rhodium, Rh, and ruthenium, Ru. The assistant ingredient is at least one element selected from the following: manganese, Mn, calcium, Ca, barium, Ba, magnesium, Mg, zinc, Zn, and aluminum, Al. The stabilizer is at least one element selected from the following: zirconium, Zr, potassium, K, sodium, Na, and lithium, Li.

### Embodiment 17

As shown in Figure 3, the front (left) baffle inside the outer metal shell (2) is the sound absorption material made from porous metal (3) while the back (right) baffle (7) is the housing for the catalyst coating made of corrugated metal. All other specifications remain the same as Embodiment 16.

### Embodiment 18

As Figure 4 shows, this embodiment places baffles of porous metal (3) between baffles of corrugated metal coated with catalyst (7). There are gaps between the baffles. All other specifications remain the same as Embodiment 16.

### Embodiment 19

As Figure 2 shows, in this embodiment, there are two baffles of porous metal in the outer shell. The volume of the catalytic converter muffler device in this embodiment is 5 times the displacement of the engine producing the exhaust. All other specifications are the same as Embodiment 16.

### Embodiment 20

As Figure 2 shows, in this embodiment, there are two baffles of porous metal in the outer shell. The volume of the catalytic converter muffler device in this embodiment is 0.3 times the displacement of the engine producing the exhaust. All other specifications are the same as Embodiment 16.

Embodiments 16 through 20 are placed inside common sedans. When tested according to government standards (GB/T3845-93) during vehicle operation, the purification efficiency are all over 95% for HC, CO, and When tested according to European Exhaust Testing Standards II, for Embodiments 16 through 20, their CO exhaust volume is less than 1.9g/km, total exhaust volume for HC and NOx is less than 0.4g/km.

The sound absorption properties of the embodiments of this invention are excellent and no additional mufflers are needed to achieve sound absorption. When the insertion loss reaches 20 to 30 dB, less than 5% of the engine efficiency is lost and the exhaust backpressure is less than 15Kpa.

## Claims

1. A muffler and catalytic converter device receiving exhaust from an engine comprising:
an outer shell; and
porous metal placed in sections inside the outer shell, wherein the porous metal has a plurality of pores and has a pore density between 80% and 98%, and the pores have diameters between 50µm and 1200µm, and
the sections of the porous metal are placed perpendicular to the longitudinal direction of the outer shell, the thickness of the sections being each between 10mm and 100mm;
first gaps between neighboring sections, the thickness of the first gaps being each between 10mm and 150mm;
**characterized by**
second gaps between the section and the inner surfaces of the shell; the thickness of the second gaps being also each between 10mm and 150mm.

2. The muffler and catalytic converter device of claim 1 wherein the diameters of said pores is between 400µm and 800µm and said pore density is between 95% and 98%.

3. The muffler and catalytic converter device of claim 1 wherein said porous metal is at least one metal selected from the group consisting of: nickel, iron, and titanium.

4. The muffler and catalytic converter device of claim 1 wherein said porous metal is a metal alloy containing at least two components A and B;
wherein said A component is between 55 wt% and 95 wt% of said porous metal and is at least one metal selected from the group consisting of: nickel, iron, and titanium; and said B component is between 5wt.% and 45 wt.% of said porous metal and is at least one element selected from the group consisting of: chromium, aluminum, cobalt, molybdenum, and zinc.

5. The muffler and catalytic converter device of claim 1,
wherein said porous metal has a layer of catalyst coating; wherein the composition of said catalyst coating comprises of an active ingredient, an assisting ingredient, and a stabilizer;
wherein said active ingredient is at least one rare earth metal selected from the group consisting of: cerium, lanthanum, praseodymium, and neodymium, and at least one precious metal selected from the group consisting of: palladium, platinum, rhodium, and ruthenium;
wherein said assisting ingredient is at least one element selected from the group consisting of: manganese, calcium, barium, magnesium, zinc, and aluminum; and
wherein said stabilizer is at least one element selected from the group consisting of: zirconium, potassium, sodium, and lithium.

6. The muffler and catalytic converter device of claim 1 having two sections of porous metal;
wherein the sum of the number of said gaps is three; and
wherein the ratio of the thickness of said three gaps are 1: between 1 and 10: between 1 and 2.

7. The muffler and catalytic converter device of claim 1 having between 3 and 6 sections of porous metal wherein the sum total of the number of said gaps is between 4 and 7.

## Patentansprüche

1. Schalldämpfer- und Katalysatoreinrichtung zur Aufnahme von Abgas aus einem Motor, umfassend:
ein äußeres Gehäuse, und
ein poröses Metall, das abschnittsweise in dem äußeren Gehäuse vorgesehen ist,
wobei das poröse Metall eine Vielzahl von Poren und eine Porendichte zwischen 80% und 98% aufweist, und die Poren Durchmesser zwischen 50 µm und 1200 µm aufweisen, und
die Abschnitte mit dem porösen Metall senkrecht zur Längsrichtung des äußeren Gehäuses angeordnet sind, wobei die Dicke der Abschnitte jeweils zwischen 10 mm und 100 mm liegt,
erste Zwischenräume zwischen angrenzenden Abschnitten, wobei die Dicke der ersten Zwischenräume jeweils zwischen 10 mm und 150 mm liegt,
**dadurch gekennzeichnet, dass**
zwischen dem Abschnitt und den Innenseiten des Gehäuses zweite Zwischenräume vorgesehen sind, wobei die Dicke der zweiten Zwischenräume ebenfalls jeweils zwischen 10 mm und 150 mm liegt.

2. Schalldämpfer- und Katalysatoreinrichtung nach Anspruch 1, wobei die Durchmesser der Poren zwischen 400 µm und 800 µm liegen, und die Porendichte zwischen 95% und 98% liegt.

3. Schalldämpfer- und Katalysatoreinrichtung nach Anspruch 1, wobei das poröse Metall zumindest ein Metall ausgewählt aus der Gruppe, umfassend Nickel, Eisen und Titan, ist.

4. Schalldämpfer- und Katalysatoreinrichtung nach Anspruch 1, wobei das poröse Metall eine Metalllegierung ist, die zumindest zwei Komponenten A und B enthält,
wobei die Komponente A zwischen 55 Gew.-% und 95 Gew.-% des porösen Metalls ausmacht und zumindest ein Metall ausgewählt aus der Gruppe, umfassend Nickel, Eisen und Titan, ist und die Komponente B zwischen 5 Gew.-% und 45 Gew.-% des porösen Metalls ausmacht und zumindest ein Element ausgewählt aus der Gruppe, umfassend Chrom, Aluminium, Kobalt, Molybdän und Zink, ist.

5. Schalldämpfer- und Katalysatoreinrichtung nach Anspruch 1,
wobei das poröse Metall mit einer Katalysatorbeschichtung versehen ist,
wobei die Zusammensetzung der Katalysatorbeschichtung einen aktiven Bestandteil, einen unterstützenden Bestandteil und einen Stabilisator enthält, wobei der aktive Bestandteil zumindest ein Seltenerdmetall ausgewählt aus der Gruppe, umfassend Cer, Lanthan, Praseodym und Neodym, und zumindest ein Edelmetall ausgewählt aus der Gruppe, umfassend Palladium, Platin, Rhodium und Ruthenium, ist,
wobei der unterstützende Bestandteil zumindest ein Element ausgewählt aus der Gruppe, umfassend Mangan, Calcium, Barium, Magnesium, Zink und Aluminium ist, und
wobei der Stabilisator zumindest ein Element ausgewählt aus der Gruppe, umfassend Zirkonium, Kalium, Natrium und Lithium, ist.

6. Schalldämpfer- und Katalysatoreinrichtung nach Anspruch 1, welche zwei Abschnitte aus einem porösen Metall aufweist,
wobei die Summer der Anzahl der Zwischenräume drei beträgt, und
wobei das Verhältnis der Dicke der drei Zwischenräume 1: zwischen 1 und 10: zwischen 1 und 2 beträgt.

7. Schalldämpfer- und Katalysatoreinrichtung nach Anspruch 1, welche zwischen 3 und 6 Abschnitte mit einem porösen Metall aufweist, und wobei die Summe der Anzahl der Zwischenräume zwischen 4 und 7 beträgt.

## Revendications

1. Dispositif de silencieux et de catalyseur recevant des gaz d'échappement d'un moteur, comprenant:
une coque extérieure, et
un métal poreux étant prévu dans quelques sections dans la coque extérieure, ledit métal poreux présentant une pluralité de pores et ayant une densité de pores variant entre 80% et 98%, et lesdits pores ayant des diamètres compris entre 50 µm et 1200 µm, et
lesdites sections présentant le métal poreux étant placées perpendiculairement vers la direction longitudinale de la coque extérieure, l'épaisseur des sections variant respectivement entre 10 mm et 100 mm,
des premières lacunes disposées entre des sections voisines, l'épaisseur des premières lacunes variant respectivement entre 10 mm et 150 mm,
**caractérisé par**
des secondes lacunes disposées entre la section correspondante et les surfaces intérieures de la coque, l'épaisseur des secondes lacunes variant également respectivement entre 10 mm et 150 mm.

2. Dispositif de silencieux et de catalyseur selon la revendication 1, les diamètres desdits pores variant entre 400 µm et 800 µm et la densité des pores variant entre 95% et 98%.

3. Dispositif de silencieux et de catalyseur selon la revendication 1, ledit métal poreux étant au moins un métal choisi parmi le groupe constitué par le nickel, le fer et le titane.

4. Dispositif de silencieux et de catalyseur selon la revendication 1, ledit métal poreux étant un alliage métallique contenant au moins deux composants A et B, le composant A constituant entre 55 % en poids et 95 % en poids dudit métal poreux et étant un métal choisi parmi le groupe constitué par le nickel, le fer et le titane, et le composant B constituant entre 5 % en poids et 45 % en poids dudit métal poreux et étant au moins un élément choisi parmi le groupe constitué par le chrome, l'aluminium, le cobalt, le molybdène et le zinc.

5. Dispositif de silencieux et de catalyseur selon la revendication 1,
le métal poreux étant muni d'un revêtement catalytique,
la composition dudit revêtement catalytique consistant à au moins un ingrédient actif, un ingrédient auxiliaire et un stabilisateur,
ledit ingrédient actif étant au moins un métal de terre rare choisi parmi le groupe constitué par le cérium, le lanthane, le praséodyme et le néodyme, et étant au moins un métal précieux choisi parmi le groupe constitué par le palladium, le platine, le rhodium et le ruthénium,
ledit ingrédient auxiliaire étant au moins un élément choisi parmi le groupe constitué par le manganèse, le calcium, le baryum, le magnésium, le zinc et l'aluminium, et
ledit stabilisateur étant au moins un élément choisi parmi le groupe constitué par le zirconium, le potassium, le sodium et le lithium.

6. Dispositif de silencieux et de catalyseur selon la revendication 1, présentant deux sections étant muni d'un métal poreux,
la somme du nombre desdites lacunes étant trois, et
le rapport de l'épaisseur desdites trois lacunes étant 1: entre 1 et 10: entre 1 et 2.

7. Dispositif de silencieux et de catalyseur selon la revendication 1, présentant entre 3 et 6 sections étant muni d'un métal poreux, la somme du nombre desdites lacunes étant entre 4 et 7.
